# EUROPEAN PATENT SPECIFICATION

(11) **EP 3 352 906 B1**
(45) Date of publication and mention of the grant of the patent: **31.07.2019**
(21) Application number: 16775025.6
(22) Date of filing: 12.09.2016
(51) Int. Cl.: B05B 7/00, B05B 7/12, B05B 7/24, B05B 15/55, B29B 7/74, B05B 1/30, B05B 7/04, B05B 12/00

(54) **TWO-COMPONENT SPRAY POLYURETHANE FOAM DISPENSER WITH CONTINUOUS GAS PURGING**
SPRITZVORRICHTUNG FÜR ZWEI-KOMPONENTEN-POLYURETHAN-SCHAUM MIT KONTINUIERLICHER GASSPÜLUNG
PULVÉRISATEUR DE MOUSSE POLYURETHANE BI-COMPOSANT AVEC SYSTÈME DE PURGE À GAZ CONTINUE

(30) Priority: 22.09.2015 US 201562221899 P
(43) Date of publication of application: 01.08.2018
(73) Proprietor: Dow Global Technologies LLC, Midland, MI 48674 (US)
(72) Inventor: STEWART, Gregory T., Midland, MI 48674 (US); SCHROER, Daniel R., Midland, MI 48674 (US); FOURNIER, Timothy P., Midland, MI 48674 (US)
(74) Representative: Houghton, Mark Phillip
(86) International application number: PCT/US2016/051211
(87) International publication number: WO 2017/053105

(56) References cited:
- WO-A1-96/00130
- WO-A1-2016/041117
- DE-A1- 2 743 589
- DE-C- 88 282
- US-A- 4 263 166

## Description

### BACKGROUND OF THE INVENTION

### Field of the Invention

The present invention relates to a dispensing device useful for dispensing two-component polyurethane foam formulations.

### Introduction

Dispensing devices for fluid components are in wide use for application of mixed fluids, especially in the area of polyurethane systems such as polyurethane foam systems. Two component polyurethane (2k-SPU) foam formulations are typically applied by simultaneously feeding an isocyanate component (A Component) with a polyol component (B Component) to create a mixture and then spraying the mixture from a dispenser.

2k-SPU foam systems are generally classified into two classes: those that contain a gaseous blowing agent (GBA) in one or both of the A and B Component prior to application and those that are free of GBA in either A or B Component prior to application ("GBA-Free 2k-SPU foam systems"). GBAs are blowing agents that have a vapor pressure greater than 0.23 Mega Pascals (MPa) at 25 degrees Celsius (°C). Typical GBAs include 1,1,2,2-tetrafluoroethane (HFC-134a), carbon dioxide, nitrogen, and 1,3,3,3-tetrafluoropropene (1234ze). GBAs are beneficial in a 2k-SPU not only as frothing aids but to lower the viscosity of the component they are in. Lower viscosity components are easier to dispense because they require less pressure to flow through flow channels of a dispenser.

GBA-Free 2k-SPU foam systems generally require a pressurized gas as a third feed concomitant with the A and B components when dispensing the 2k-SPU foam system. GBA-Free 2k-SPU foam systems can be high pressure systems or low pressure systems. In high pressure systems, which are systems that require dispensing pressures greater than 4 Mega Pascals (MPa), the pressurized gas helps shape the spray. In low pressure systems, which are systems that can be dispensed at pressures lower than 4 MPa, typically lower than 2 MPa, the pressurized gas is useful as a motive and mixing force for the A and B components. The requirement of a pressurized gas means that a dispenser requires at least three simultaneous feeds as opposed to two feed for 2k-SPU foam systems containing GBA. Additionally, the lack of GBA means that the A and B components are typically higher viscosity than in 2k-SPU foam systems containing GBA, which means the dispenser requires higher pressures, larger feed channels or both.

GBA-Free 2k-SPU foam systems, even low pressure systems, are more challenging to apply than other 2k-SPU foam systems not only because they are more viscous, but because the dispenser tends to plug more quickly if dispensing is started and stopped repeatedly. For example, 2k-SPU foam systems containing GBA prior to application do not tend to plug the dispenser even when repeatedly starting and stopping flow for about 30 seconds and then starting flow again. In contrast, GBA-Free 2k-SPU foam systems tend to plug the dispenser after just a few such cycles. As a result, it is more difficult to apply GBA-Free 2k-SPU foam systems because stopping flow of fluids to move equipment can result in plugging of the dispenser.

It would desirably advance the art to develop a dispenser for GBA-Free 2k-SPU foam systems, even low pressure systems, that prevents plugging of the dispenser when the dispenser is in an "off' position and is not applying the foam system. Even more desirable is such a dispenser that does not require activating one trigger to turn the dispenser on and off and a second trigger to purge the dispenser of 2k-SPU foam system components that have been mixed together.

### BRIEF SUMMARY OF THE INVENTION

The present invention provides a dispenser for GBA-Free 2k-SPU foam systems, even low pressure systems, that prevents plugging of the dispenser when the dispenser is in an "off' position and is not applying the foam system. Moreover, the present invention provides a dispenser that does not require activating one trigger to turn the dispenser on and off and a second trigger to purge the dispenser of 2k-SPU foam system components that have been mixed together.

The present invention is a result of discovering that designs such as those in PCT Application number CN14/086506 published as WO2016/041117 A1 which have a "bleed groove" in the spool fail to provide enough air flow volume in the off position to satisfactorily purge the dispensing channel of the 2k-SPU formulation. Moreover, the present invention is a result of discovering that providing a fourth flow passage through the spool of the dispenser that aligns a gas feed channel with the dispensing channel when in the closed position allows the gas to expel residual 2k-SPU reactants in the dispensing channel without requiring any extra step, such as pulling a second trigger. A continuous flow of gas through the dispensing channel while in the "off' position ensures the dispensing channel does not plug between applications of the GBA-Free 2k-SPU foam system components. Use of a continuous flow of gas whether 2k-SPU is being applied or not is an improvement over using temporary bursts of gas through the dispensing channel because it provides continual purging of the dispensing channel rather than guessing how long gas flow is needed to purge the reactive system components from the dispensing channel.

Even more, it was unexpectedly discovered that optimal dispenser performance, in terms of dispensing GBA-Free 2k-SPU foam system components when in the "on" position and cleaning of the system components from the dispensing channel when in the "off' position, occurs when the fourth flow passage has a larger cross sectional area than the third flow passage when the third flow channel is the flow channel that aligns with a feed channel through which gas flows and the dispensing channel when the dispenser is in the "on" position and the fourth flow passage aligns with the feed channel through which gas flows and dispensing channel when in the "off' position. The smaller cross sectional area of the third flow passage results in higher pressure gas flow to assist in dispensing the 2k-SPU foam system components while the larger cross sectional area of the fourth flow passage results in lower gas pressure but greater gas volume for purging the dispensing channel. Experiments have shown that the lower pressure and higher volume gas flow is more effective at purging the dispensing channel than lower volume and higher pressure gas.

In a first aspect, the present invention is a dispenser **(10)** comprising: (a) a housing **(20)** with a feed end **(21)** and an opposing dispensing end **(22),** the feed end having defined therein at least three feed channels **(23, 24** and **25)** and the dispensing end having defined therein at least one dispensing channel **(26)**; (b) a spool valve mounted in the housing between the feed end and dispensing end, the spool valve comprising a spool **(30)** with separate first, second and third flow passages **(31, 32** and **33)** and a fourth flow passage **(34)** that optionally intersects the third flow passage, where the flow passages are defined through the spool and each flow passage has a feed end opening (**31a, 32a, 33a** and **34a,** respectively) and a dispensing end opening (**31b, 32b, 33b** and **34b,** respectively), the spool has at least four gasket grooves **(38a, 38b, 38c** and **38d)** defined circumferentially around the spool and in each of which a gasket (**100a, 100b, 100c** and **100d,** respectively) resides so that each gasket presses against the spool and housing to form a seal around the circumference of the spool with a gasket groove defined on each side of the feed end opening and dispensing end opening of each of the four flow passages such that the feed end opening and dispensing end opening of the third and fourth flow passages residing between the same two gasket grooves while the first flow passage feed end opening and dispensing end opening are the only flow passage openings of the four flow passages residing between one pair of gasket grooves and the second flow passage feed end opening and dispensing end opening are the only flow passage openings of the four flow passages residing between a second pair of gasket grooves; (c) a deformable sealing plug **(40)** in at least two feed channels positioned so as to be in a sealing orientation with the housing about the feed channel so as to prevent fluid communication through the feed channel around the sealing plug, the sealing plug having opposing spool end **(41)** and feed end **(42)** and a flow channel **(43)** extending through the sealing plug and through the opposing ends of the sealing plug, wherein the spool end of the sealing plug is pressing against and is in sealing contact with the spool, the entire sealing plug being elastomeric and deformable; and (d) a nipple **(50)** in each of at least the two feed channels of the housing containing the sealing plugs and extending inside and out from the feed end of the feed channels, the nipples having opposing entrance end **(51)** and exit end **(52)** and a flow channel **(53)** extending through each nipple, including through the exit and entrance ends, the nipples oriented such that the exit end of a nipple presses against the feed end of a sealing plug within the feed channel of the housing and such that the flow channels of sealing plug and nipple are in fluid communication, the nipples being free of screw threading that screws the nipple into the feed channel; wherein the spool can reversibly rotate between: (i) an open position where each of the three separate flow passages through the spool aligns in fluid communication each with distinct feed and dispensing channels of the housing with the first and second flow passages through the spool achieving fluid communication with a feed channel of the housing through a flow channel of a sealing plug and nipple and through a dispensing channel; and (ii) a closed position where the first and second flow passage through the spool are not in fluid communication with a feed channel of the housing and the fourth flow passage is in fluid communication with feed and dispensing channels of the housing that the third flow passage was in fluid communication with when in the open position.

The dispenser of the present invention is useful for dispensing two-component spray polyurethane foam systems.

### BRIEF DESCRIPTION OF THE DRAWINGS

Figure 1 illustrates a dispenser of the present invention.
Figure 2 illustrates and exploded view of the dispenser of Figure 1.
Figure 3 illustrates a cut-away view of the dispenser of Figure 1.
Figures 4a and 4b are larger images of the sealing plug of the dispenser in Figure 1.
Figures 5 illustrates a spool that can be used with dispensers of the present invention.

### DETAILED DESCRIPTION OF THE INVENTION

"And/or" means "and, or as an alternative". All ranges include endpoints unless otherwise indicated. "Multiple" means two or more.

The mixing device of the present invention comprises a housing with a feed end and an opposing dispensing end. The feed end of the housing has defined therein at least three feed channels. The dispensing end has at least one dispensing channel in fluid communication with the feed channels.

The feed channels and dispensing channel(s) are enclosed by the housing with openings providing access into and out from the channels through the housing.

Desirably, the feed channels are free of threading that allows an element to screw into the feed channel. Threading in a feed channel is part of the housing defining the feed channel. A threaded element can screw into a feed channel that has threading by interlocking with the threads of the housing within the feed channel and rotating to be drawn into (or out from) the feed channel. Desirably, the feed channel is also free of components that have defined therein threads which an element can screw into. Components in the feed channel are desirably frictionally fit or pressure fit into the feed channel, which means that friction between the component and housing around the feed channel hold the element in place.

The present dispenser can accommodate multiple designs for orienting the feed channels with respect to one another. For example, the feed channels can all be in a line (coplanar) with respect to one another. Alternatively, two of the feed channels can be in a line with a third feed channel out of line with the other two (non-coplanar with the other two) such as in a triangular orientation.

The housing, when the dispenser is in an open orientation, defines at least one dispensing channel in fluid communication with the feed channels. When dispensing 2k-SPU foam formulation, the A and B Component and the gas component flow through independent feed channels and are combined within the housing prior to being dispensed from the housing through one or more than one dispensing channel. Notably, the housing can be a single piece or comprise multiple pieces that fit together. For example, the dispensing channel or channels may be defined in a piece that is removably attached to another piece defining the feed channels.

The dispenser comprises a spool valve in the housing between the feed channels and the dispensing channel(s). The spool valve comprises a spool that rotates between an open orientation and a closed orientation. Desirably, the spool is of a general cylindrical shape with an essentially circular cross section on an axis that traverses the feed and dispensing channels and about which the spool rotates. The spool has separate first, second and third flow passages and a fourth flow passage that optionally intersects the third flow passage. Each of the flow passages has a feed end opening and a dispensing end opening defined in the spool. Each of the flow passages is desirably entirely enclosed within the spool except for the feed end opening and the dispensing end opening of the flow passages.

Desirably, the fourth flow passage has a larger average cross sectional diameter than the third flow passage. In that regard, it is desirable for the fourth flow passage to allow a higher volume of gas to flow through it at a given pressure than the third flow passage. The third and fourth flow passages allow gas to flow through them during operation of the dispenser. The third flow passage allows gas to flow through the spool when the dispenser is in an open orientation. The fourth flow passage allows gas to flow though the spool when the dispenser is in a closed orientation. A larger volume of gas flow is desirable through the fourth flow passage to better purge 2k-SPU spray foam material from the dispensing end of the dispenser.

The third and fourth flow passages can intersect within the spool or can be independent of one another through the spool. It is generally easier to fabricate the spool by allowing the third and fourth flow passages to intersect within the spool. By "intersect" it is meant that there is fluid communication within the spool between the third and fourth flow passages.

The spool has defined circumferentially around the spool at least four gasket grooves with a gasket residing in each one. Each gasket presses against the spool and housing to form a seal around the circumference of the spool. The gasket grooves are positioned such that a gasket groove is defined on each side of the feed end opening and dispensing end opening of each of the four flow passages. The feed end opening and dispensing end opening of the third and fourth flow passages reside between the same two gasket grooves while the first flow passage feed end opening and dispensing end opening are the only flow passage openings of the four flow passages residing between a first pair of gasket grooves and the second flow passage feed end opening and dispensing end opening are the only flow passage openings of the four flow passages residing between a second pair of gasket grooves. So, the spool has at least four gaskets residing around the circumference of the spool such that the opening and dispensing end of the first flow passage resides between a first pair of gaskets, opening and dispensing end of the second flow passage resides between a second pair of gaskets and the opening and dispensing ends of the third and fourth flow passages reside between a third pair of gaskets.

The dispenser comprises deformable sealing plugs in at least two feed channels through which the A and B Components are fed. Each sealing plug is in sealing orientation with the feed channel it is in, which means that there is no fluid communication through the feed channel around the sealing plug. To facilitate achieving a sealing orientation in the feed channel, the sealing plug desirably have a lip molded into it that runs circumferentially around the sealing plug and that presses against the housing within the feed channel in which the sealing plug resides.

The sealing plugs each have opposing spool and feed ends and a flow channel extending through the sealing plug and through the opposing spool and feed ends to create a spool end opening and a feed end opening into the sealing plug flow channel. The flow channel is in fluid communication with outside of the housing through the feed end opening and feed channel. The spool end of the sealing plug presses against the spool. The spool end of the sealing plug is in sealing contact with the spool, and aligns with a flow passage through the spool when the spool is in an open orientation and is sealed against the spool without access to a flow passage in the spool when in a closed orientation, except if there is a sealing plug in a gas feed channel that provides access to the fourth flow channel while in the closed orientation. Sealing contact means that fluid flowing through the sealing plug is prohibited from flowing between the sealing plug and the spool but rather either flows through the sealing plug flow channel into a flow passage of the spool or is prohibited from flowing through the sealing plug flow channel by the spool.

Desirably, the entire sealing plug is elastomeric and conformable. The sealing plug conforms to the housing feed channel in which it resides in order to seal against the housing to prevent fluid flow around the sealing plug within the housing feed channel. The spool end of the sealing plug conforms to the spool as the sealing plug is pressed against the spool so as to form a seal against the spool thereby preventing fluid flow from the flow channel through the sealing plug to the outside of the spool as opposed to into a flow passage of a spool. Desirably, the entire plug is elastomeric and conformable for ease and convenience of manufacture. In fact, it is desirable that the entire seal plug is a made of a single homogeneous composition rather than made of multiple elements of different compositions for ease of manufacture, low cost, and structural integrity of the seal plug. Being made of a single homogeneous material prevents distinct components such as gaskets from becoming displaced from the sealing plug, which can result in leaks.

Desirably, the sealing plug is a unitary structure made from a single homogeneous composition that is an elastomeric polymer. For example, the sealing plug can be made of natural rubber, polyurethane, polybutadiene, neoprene, silicone or preferably an elastomeric rubber made of ethylene propylene diene monomer (EPDM) rubber and polypropylene (for example, the elastomer available under the trade name SANTOPRENE™, SANTOPRENE is a trademark of Exxon Mobil Corporation).

The spool end of the sealing plug desirably has a contoured shape that generally matches the contour of the spool against which the spool end is pressed. For instance, the spool is desirably generally cylindrical in shape with a generally circular cross section so the spool end of the plug desirably has a curved profile to generally match the curve of the outside of the cylindrical spool. By "generally" match it is understood that the contour of the spool end of the sealing plug does not have to be identical to the profile of the outside of the spool against which it presses, though it can be an identical match. The sealing plug is conformable so slight deviations from an identical matching profile can be accommodated while still achieving a sealing configuration with the spool if the profile of the spool end of the sealing plug is not identical to the outside profile of the spool. If the sealing plug is sufficiently conformable, the spool end can be of essentially any shape and still form a sealing configuration with the spool. However, to avoid potential difficulties with rotating the spool between open and closed orientations in the dispenser and to facilitate achieving a sealing configuration with the spool, it is desirable for the spool end of the sealing plug to have a shape generally matching the profile of the outside of the spool.

The sealing plug can include alignment features that facilitate positioning of the sealing plug in a particular orientation with respect to a reference such as the housing or spool. Such alignment features are particularly valuable when the spool end of the sealing plug is contoured to fit the spool because the alignment features allows orientation of the sealing plug so that the sealing plug properly fits to the spool. Alignment features include any characteristic that is part of the sealing plug and that indicates orientation within a feed channel of the housing. For example, the sealing plug can have one or more than one protrusion that extends partially into the flow channel of the sealing plug. Then, the sealing plug can be inserted into the feed channel of the housing in a consistent orientation with respect to the housing for each sealing plug by positioning the protrusion in the same orientation with respect to the housing. For example, a sealing plug can have one or more than one protrusion within the flow channel of the sealing plug that is positioned in a certain direction when the profile of the spool end of the sealing plug is aligned so as to mate with the orientation of the spool. The alignment feature can also be, or alternatively is, on the outside of the sealing plug and fit into a groove or other feature within the feed channel. For example, the sealing plug can have a protrusion, or preferably opposing protrusions, on the surface of the sealing plug that contacts the housing when inserted into the feed channel of the housing and the housing can have corresponding grooves into which the protrusions fit and seal against the housing. Incorporating threading increases cost and complication of manufacture and assembly, which the present invention can avoid.

The sealing plug is desirably free of threading enabling it to screw into a feed channel of the housing, but rather frictionally fits into a feed channel and seals against the housing within the feed channel by pressing against the housing.

The dispenser further comprises a nipple extending inside and out from the feed end of at least the two feed channels of the housing that contain sealing plugs. The nipples have opposing entrance and exit ends and a flow channel extending through each nipple through the entrance end and through the exit end. In at least two of the feed channels of the housing there is both a sealing plug and a nipple oriented such that the exit end of the nipple presses against, preferable directly against, the feed end of the sealing plug and the flow channel of the nipple is in fluid communication with the flow channel of the sealing plug. The sealing plug presses against the spool with its spool end against a nipple with its feed end and, as such, is held in place within the channel by the spool and nipple in addition to the friction between the housing inside the feed channel and the sealing plug. Desirably, the sealing plug forms a seal against the exit end of the nipple so that fluid traveling through the flow channel of the nipple into the flow channel of the sealing plug does not leak out between the nipple and sealing plug where the nipple and sealing plug press against one another.

The nipples are free of threading for screwing into a feed channel of the housing. Instead, the nipples frictionally fit into a feed channel of the housing with the nipple pressing against the housing within the feed channel. The nipple desirably forms a seal with the housing within the feed channel of the housing. The nipple extends out from the feed end of the feed channel of the housing to enable connecting each nipple to a feed line. Any type of connection is possible on the end of the nipple. One convenient form of the nipple has barbs circumferentially around the nipple that extends outside the housing feed channel so the entrance end of the nipple can be positioned into tubing and the barbs frictionally hold the tubing about the nipple. The nipple can alternatively comprise any type of connector such as compressing fitting attachments, pipe thread attachments and the like on the entrance end of the nipple.

The dispenser can further comprise fasteners that extend from outside the housing into the housing proximate to the feed channel and nipple within the feed channel in such a way as to either extend around or into the nipple to further hold the nipple in place in the feed channel. Suitable fasteners include metal staples, metal clips and plastic clips.

The spool of the dispenser is positioned in the housing so that it can reversibly rotate between an open position and a closed position. In the open position, the spool is oriented such that the feed end of the first through third flow passages through the spool aligns in fluid communication each with a flow channel of the housing with at least two of the flow passages achieving fluid communication with a flow channel of the housing through a flow channel of a sealing plug and nipple. Similarly, the three flow passages through the spool are in fluid communication with the dispensing channel of the housing when the spool is in the open position. Hence, when the spool is in an open position, fluid flow is achievable through the nipples and sealing plugs of two feed channels through the spool and through the dispensing channel of the dispenser and fluid flow is simultaneously achievable through a third feed channel (optionally, via a flow channel of a nipple, sealing plug, or both) and through a flow passage in the spool and through the dispensing channel of the dispenser. While it is required that fluid flow is achievable through three flow passages of the spool and through three feed channels of the housing into the dispensing channel of the housing when the spool is in an open orientation, there can be more than three feed channels in the housing each of which are in fluid communication with a flow passage through the spool, optionally through a flow channel of a nipple and/or sealing plug and optionally with the dispensing channel of the housing or some other channel of the housing. Alternatively, the spool can only align three flow passages with three feed channels to achieve fluid communication through the three feed channels and three flow passages into the dispensing channel of the housing.

In the closed position, the spool is oriented with the feed and dispensing ends of the first through third flow passages no longer aligned in fluid communication with a feed channel of the housing, but with the fourth flow passage of the spool aligned with a feed channel and dispensing channel of the dispenser. Typically, when the spool is in the closed position the fourth flow passage aligns with feed channel and dispensing channel that the third flow passage had aligned with when the spool was in the open position.

The dispenser can also include a mixing component after the spool valve wherein fluid flow from two or more, preferably at least three of the feed channels are combined and fed into the dispensing channel of the housing. The mixing component can comprise a static mixing element to facilitate mixing of the fluids from the different feed channels.

The flow passages through the spool can follow similar or different directions with respect to one another through the spool. For instance, the spool can define three flow passages through the spool that all travel in a straight line in plane with a diameter of a cross section of the spool. Such an alignment of spool flow passages is useful when there are three coplanar feed channels in a line and the spool flow passages are desired to have dispensing ends aligned linearly in a plane. When the feed channels are not aligned linearly in a coplanar fashion then at least one of the flow passages through the spool follows a different orientation from the other flow passages. In one desirable configuration, the feed channels are non-planar yet the dispensing openings of the flow passages through the spool are aligned linearly in a coplanar fashion. In such a configuration, two of the spool flow passages can extend along a diameter of a spool cross section and a third spool flow passage follows a curved path that extends from above or below the feed end of the other two flow passages and curves within the spool to align the dispensing end linearly in a coplanar orientation with respect to the dispensing ends of the other two spool flow passages. Such a configuration is desirable to achieve a smaller housing size about the feed channel than might otherwise be achievable if the three feed channels were aligned linearly in a coplanar fashion.

In one desirable embodiment, the first and second feed channels are coplanar and the third feed channel is non-coplanar with any other flow channel and the spool is cylindrical. The first and second flow passages extending radially through the spool and are capable of aligning with two feed channels and the third flow passage entering in a non-coplanar orientation with the other feed channels that are coplanar but exiting the spool aligned in a linear orientation with respect to the other flow passages such that when the spool is oriented in an open orientation the non-planar entrances to the flow passages each align with a different one of the feed channels and fluids flowing through the feed channels proceed through the flow passages of the spool so as to exit the spool flow passages aligned along a plane
The dispenser can comprise a handle, preferably affixed to or molded as a unitary portion of the housing of the dispenser. A handle facilitates holding and aiming of the dispenser.

The dispenser can comprise a trigger attached to the spool so that when the trigger is moved in a first direction the spool rotates to an open orientation and when the trigger moves in an opposite direction relative to the first direction the spool rotates to a closed orientation. The trigger can be as simple as a lever attached to one or both ends of the spool so that moving the lever rotates the spool. Desirably, the dispenser comprises both a handle and a trigger with the trigger connected to the spool and extending in a similar or same plane as the handle so as to allow holding of the dispenser via the handle and opening and closing of the spool by squeezing or releasing the trigger. The dispenser can further comprise a spring that holds the trigger in a position that keeps the spool in a closed orientation unless the trigger is moved and then replaces the trigger in a position that places the spool in a closed orientation when released.

The dispenser of the present invention is useful for dispensing three or more fluids in a controlled manner. A particularly valuable use for the dispenser is for dispensing 2k-SPU foam formulation using a pressurized gas. For example, one method of using the dispenser of the present invention comprises: (A) simultaneously supplying under pressure (i) a liquid isocyanate component ("A component") into a first feed channel of the housing through the flow channels of a nipple and plug residing in the first feed channel; (ii) a liquid polyol component ("B Component") into a second feed channel of the housing through the flow channels of a nipple and plug residing in the second feed channel; and (iii) a gas into a third feed channel of the housing, preferably where (i) and (ii) are free of gaseous blowing agents; (B) position the spool of the dispenser to allow the A Component, B Component and gas to flow through separate flow passages through the spool; and (C) dispensing a combination of the A Component, B Component and gas out from the dispensing channel of the housing. The design of the present dispenser is such that the feed channels for the A Component and B Component remain sealed even under pressures necessary for GBA-Free 2k-SPU foam system applications.

The method of using the dispenser can further comprise a step (D) after step (C) where step (D) is positioning the spool of the dispenser in a closed position where the first and second flow passages of the spool are no longer in fluid communication with the first and second feed channel of the housing and where the fourth flow passage of the spool is in fluid communication with the third flow channel of the housing and gas flows through the fourth flow passage of the spool and out from the dispensing channel of the housing

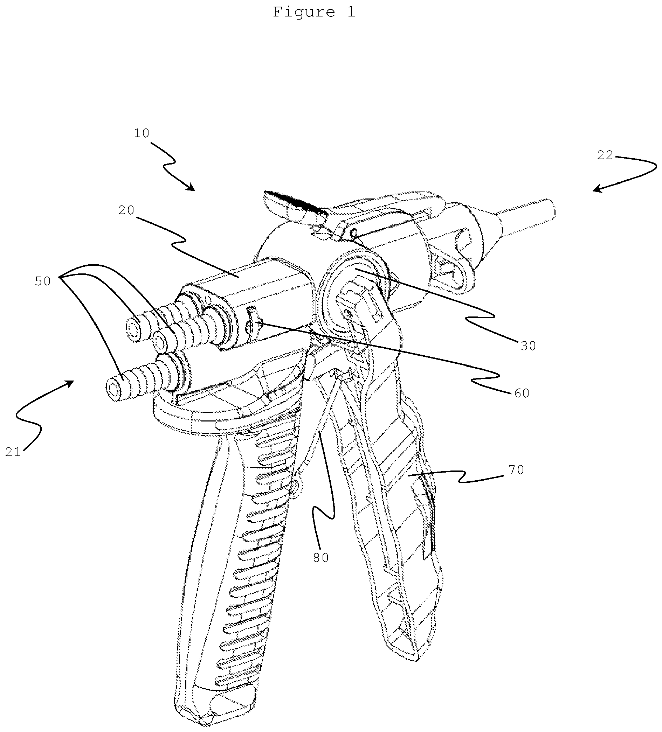

Figures 1-5 and the description below further illustrate embodiments and/or aspects of embodiments of a dispenser of the present invention.

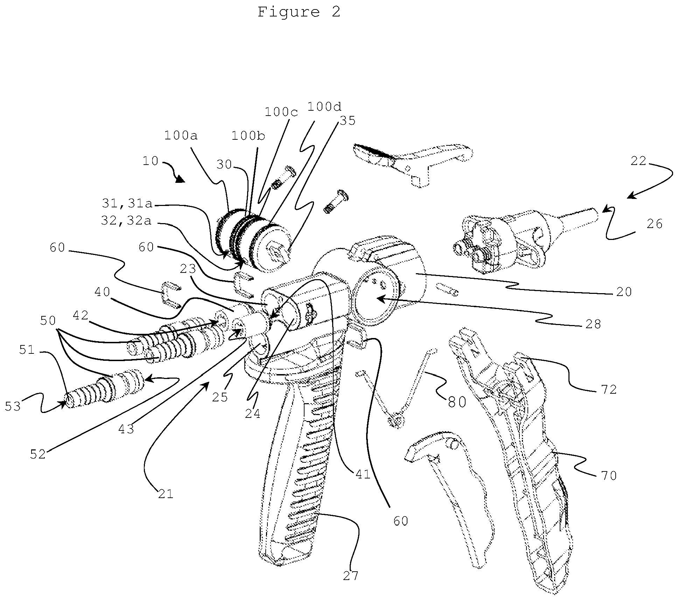

Figure 1 illustrates dispenser **10** comprising housing **20** with feed end **21** and dispensing end **22,** spool **30,** sealing plugs **40** (not visible), nipples **50,** fastener **60,** trigger **70** and spring **80.** Further perspectives and aspects of dispenser **10** are illustrated in Figures 2 -5.

Figure 2 illustrates an exploded view of dispenser **10** revealing elements of the dispenser. Housing **20** shows a feed end **21,** dispensing end **22,** feed channels **23, 24** and **25** and dispensing channel **26.** Housing **20** further comprises handle **27** and spool receiver **28.** Spool **30** fits into spool receiver **28** to form the spool valve of dispenser **10.** Spool **30** has flow passage **31, 32, 33** and **34** (**33** and 34 are not visible) which respectively have feed ends **31a, 32a, 33a** and **34a** (**33a** and **34a** are not visible). Dispensing ends **31b, 32b, 33b** and **34b** of spool flow passages **31, 32, 33** and **34** are not visible. Spool **30** comprises tabs **35** with which spool **30** can be rotated from an open orientation to a closed orientation in housing **20.** Spool **30** further has defined circumferentially around it four gasket grooves **38a, 38b, 38c,** and **38d** (none of which are visible in Figure 2) in which O-rings **100a, 100b, 100c,** and **100d** respectively reside. Dispenser **10** has two deformable sealing plugs **40** that fit into feed channels **24** and **25.** Sealing plugs **40** each have a spool end **41,** feed end **42** and a flow channel **43** extending through each sealing plug **40.** Spool end **41** of each sealing plug **40** presses against spool **30** of the dispenser. There is a nipple **50** that inserts into each of feed channels **23, 24** and **25.** Each nipple **50** has an entrance end **51** and an exit end **52** and a flow channel **53.** Exit end **52** presses against feed end **42** of the deformable sealing plugs **40** in feed channels **23** and **24.** Fasteners **60** extend through housing **20** to hold nipples **50** in place within feed channels **23, 24** and **25.** Dispenser **10** comprises trigger **70** with attachment means **72** that attach to tabs **35** of spool **30.** Displacing trigger **70** towards or away from handle **27** rotates spool **30** either into an open orientation or a closed orientation in housing **20.** Spring **80** serves to restore trigger **70** into a position away from handle **27,** which positions spool **30** into a closed orientation. Squeezing trigger **70** towards handle **27** rotates spool **30** into an open orientation. Releasing trigger **70** allows spring **80** to move trigger **70** away from handle **27** and rotate spool **30** into a closed orientation.

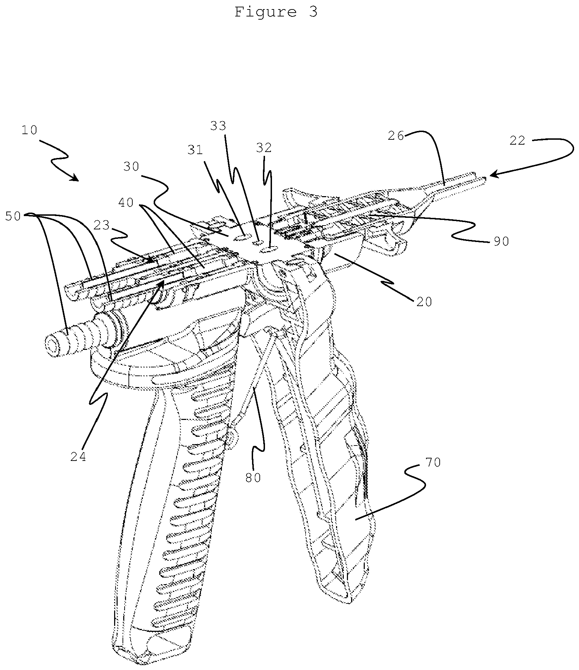

Figure 3 illustrates a cut-away view of dispenser **10** with the top of the dispenser cut away to show the orientation of nipples **50,** sealing plugs **40** and spool **30** in feed channels **23** and **24.** Dispenser **10** has trigger **70** and spool **30** in a closed orientation and flow passages **31, 32** and **33** are all visible in spool **30.** Also illustrated in this cut-away view is static mixer **90** that resides in fluid communication with and between feed channels **23, 24** and **25** (feed channel **25** not shown in Figure 3) and dispensing channel **26** and serves to mix A and B components and pressurized gas together before being dispensed through feed end **22** of dispenser **10.**

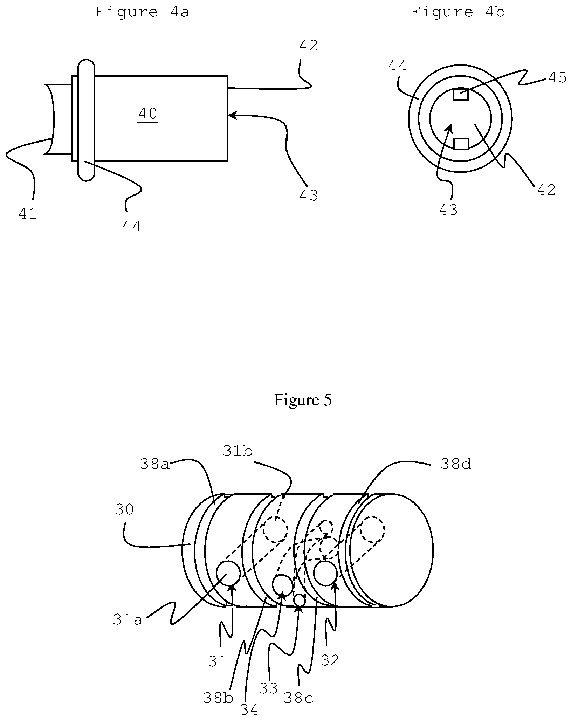

Figures 4a and 4b illustrate larger images of sealing plug **40** including a side view in Figure 4a and an end view in Figure 4b as viewed from feed end **42.** Sealing plug **40** comprises a contoured profile on spool end **41** that conforms to the cylindrical body of spool **30.** Sealing plug **40** also comprises lip **44** that extends circumferentially around sealing plug **40.** Sealing plug **40** further comprises alignment features **45** that are protrusions extending into flow channel **43.** Alignment features **45** identify the sides of sealing plug **40** corresponding to the furthest extending portion of spool end **41** and thereby allow alignment of the sealing the contour of spool end **41** from feed end **42.**

Figure 5 illustrates a spool **30** with flow passages **31, 32, 33** and **34.** Flow passages 31 and 32 are first and second flow passages while flow passage 33 corresponds to the third flow passage and flow passage 34 is the fourth flow passage. Also evident are gasket grooves **38a, 38b, 38c** and **38d** that extend circumferentially around spool **30.** Spool **30** in Figure 5 is for use in a dispenser where the three feed channels are not coplanar. When in the open configuration, flow can occur from the feed channels through flow passages **31, 32** and **33,** but not **34.** When in the closed configuration, flow can occur through flow passage **34,** but not **31, 32** and **33.**

## Claims

1. A dispenser **(10)** comprising:
(a) a housing **(20)** with a feed end **(21)** and an opposing dispensing end **(22),** the feed end having defined therein at least three feed channels **(23, 24** and **25)** and the dispensing end having defined therein at least one dispensing channel **(26)**;
(b) a spool valve mounted in the housing between the feed end and dispensing end, the spool valve comprising a spool **(30)** with separate first, second and third flow passages **(31, 32** and **33)** and a fourth flow passage **(34)** that optionally intersects the third flow passage, where the flow passages are defined through the spool and each flow passage has a feed end opening (**31a, 32a, 33a** and **34a,** respectively) and a dispensing end opening (**31b, 32b, 33b** and **34b,** respectively), the spool has at least four gasket grooves **(38a, 38b, 38c** and **38d)** defined circumferentially around the spool and in each of which a gasket (**100a, 100b, 100c** and **100d,** respectively) resides so that each gasket presses against the spool and housing to form a seal around the circumference of the spool with a gasket groove defined on each side of the feed end opening and dispensing end opening of each of the four flow passages such that the feed end opening and dispensing end opening of the third and fourth flow passages residing between the same two gasket grooves while the first flow passage feed end opening and dispensing end opening are the only flow passage openings of the four flow passages residing between one pair of gasket grooves and the second flow passage feed end opening and dispensing end opening are the only flow passage openings of the four flow passages residing between a second pair of gasket grooves;
(c) a deformable sealing plug **(40)** in at least two feed channels positioned so as to be in a sealing orientation with the housing about the feed channel so as to prevent fluid communication through the feed channel around the sealing plug, the sealing plug having opposing spool end **(41)** and feed end **(42)** and a flow channel **(43)** extending through the sealing plug and through the opposing ends of the sealing plug, wherein the spool end of the sealing plug is pressing against and is in sealing contact with the spool, the entire sealing plug being elastomeric and deformable; and
(d) a nipple **(50)** in each of at least the two feed channels of the housing containing the sealing plugs and extending inside and out from the feed end of the feed channels, the nipples having opposing entrance end **(51)** and exit end **(52)** and a flow channel **(53)** extending through each nipple, including through the exit and entrance ends, the nipples oriented such that the exit end of a nipple presses against the feed end of a sealing plug within the feed channel of the housing and such that the flow channels of sealing plug and nipple are in fluid communication, the nipples being free of screw threading that screws the nipple into the feed channel;
wherein the spool can reversibly rotate between: (i) an open position where each of the three separate flow passages through the spool aligns in fluid communication each with distinct feed and dispensing channels of the housing with the first and second flow passages through the spool achieving fluid communication with a feed channel of the housing through a flow channel of a sealing plug and nipple and through a dispensing channel; and (ii) a closed position where the first and second flow passage through the spool are not in fluid communication with a feed channel of the housing and the fourth flow passage is in fluid communication with feed and dispensing channels of the housing that the third flow passage was in fluid communication with when in the open position.

2. The dispenser of Claim 1, wherein the fourth flow passage has a larger average cross sectional area than the third flow passage.

3. The dispenser of any previous Claim, wherein the third and fourth flow channel intersect within the spool.

4. The dispenser of any previous Claim, wherein the spool end of the sealing plugs have a profile that generally matches that of the spool profile and each sealing plug is aligned in a feed channel so that the profile of the spool end of the sealing plug is aligned and conforms to the profile of the spool.

5. The dispenser of Claim 4, further **characterized by** the sealing plug having alignment features (45) that facilitate insertion into a feed channel in a known orientation so that the contour of the spool end forms to the contour of the spool.

6. The dispenser of any previous Claim, wherein the feed channels of the housing that contain a sealing plug are each free of threading for screwing an element into the feed channel.

7. The dispenser of any previous Claim, further **characterized by** the first and second feed channels being coplanar and the third feed channel being non-coplanar with any other flow channel and wherein the spool is cylindrical with the first and second flow passages extending radially through the spool and capable of aligning with two feed channels and the third flow passage entering in a non-coplanar orientation with the other feed channels that are coplanar but exiting the spool aligned in a linear orientation with respect to the other flow passages such that when the spool is oriented in an open orientation the non-planar entrances to the flow passages each align with a different one of the feed channels and fluids flowing through the feed channels proceed through the flow passages of the spool so as to exit the spool flow passages aligned along a plane.

8. The dispenser of any previous Claim, further comprising a trigger (70) attached to the spool so that when the trigger is moved in a first direction the spool rotates to an open orientation and aligns the flow passages of the spool into fluid communication with the feed channels of the housing and when the trigger moves in a direction opposite to the first direction, the spool rotates into a closed orientation.

9. A method of using the dispenser of any previous Claim, the method comprising: (A) simultaneously supplying under pressure: (i) a liquid isocyanate component into a first feed channel of the housing through the flow channels of a nipple and plug residing in the first feed channel; (ii) a liquid polyol component into a second feed channel of the housing through the flow channels of a nipple and plug residing in the second feed channel; and (iii) a gas into a third feed channel of the housing; (B) positioning the spool of the dispenser to allow the liquid isocyanate component to flow through the first flow passage of the spool, the polyol component to flow through the second flow passage of the spool and the gas to flow through the third flow passage of the spool; and (C) dispensing a combination of the isocyanate component, polyol component and gas out from the dispensing channel of the housing.

10. The method of Claim 9, further comprising a step (D) after step (C) where step (D) is positioning the spool of the dispenser in a closed position where the first and second flow passages of the spool are no longer in fluid communication with the first and second feed channel of the housing and where the fourth flow passage of the spool is in fluid communication with the third flow channel of the housing and gas flows through the fourth flow passage of the spool and out from the dispensing channel of the housing.

## Patentansprüche

1. Spender (10), Folgendes beinhaltend:
(a) ein Gehäuse (20) mit einem Zuführende (21) und einem gegenüberliegenden Spenderende (22), wobei das Zuführende mindestens drei hierin definierte Zuführkanäle (23, 24 und 25) besitzt und das Spenderende mindestens einen hierin definierten Spendekanal (26) besitzt;
(b) ein Schieberventil, welches in dem Gehäuse zwischen dem Zuführende und dem Spenderende montiert ist, wobei das Schieberventil einen Schieber (30) mit einem separaten ersten, zweiten und dritten Strömungsdurchgang (31, 32 und 33) beinhaltet und mit einem vierten Strömungsdurchgang (34), welcher optionsweise den dritten Strömungsdurchgang schneidet, wobei die Strömungsdurchgänge durch den Schieber definiert sind und jeder Strömungsdurchgang eine Zuführendenöffnung (jeweils 31a, 32a, 33a und 34a) und eine Spenderendenöffnung (jeweils 31b, 32b, 33b und 34b) besitzt, wobei der Schieber mindestens vier Dichtungsnuten (38a, 38b, 38c und 38d) besitzt, welche in Umfangsrichtung um den Schieber definiert sind und in welchen jeweils eine Dichtung (jeweils 100a, 100b, 100c und 100d) befindlich ist, so dass jede Dichtung gegen den Schieber und das Gehäuse drückt, um eine Dichtung rund um den Umfang des Schiebers zu bilden, wobei einer Dichtungsnut an beiden Seiten der Zuführendenöffnung und der Spenderendenöffnung eines jeden der vier Strömungsdurchgänge in einer Weise definiert ist, dass die Zuführendenöffnung und die Spenderendenöffnung des dritten und des vierten Strömungsdurchgangs zwischen denselben beiden Dichtungsnuten befindlich sind, während die erste Strömungsdurchgang-Zuführendenöffhung und -Spenderendenöffnung die einzigen Strömungsdurchgangsöffnungen der vier Strömungsdurchgänge sind, welche zwischen einem Paar von Dichtungsnuten befindlich sind, und die zweite Strömungsdurchgang-Zuführendenöffnung und -Spenderendenöffnung die einzigen Strömungsdurchgangsöffnungen der vier Strömungsdurchgänge sind, welche zwischen einem zweiten Paar von Dichtungsnuten befindlich sind;
(c) einen verformbaren Dichtstopfen (40) in mindestens zwei Zuführkanälen, welcher positioniert ist, um in einer Dichtausrichtung mit dem Gehäuse um den Zuführkanal zu stehen, um so Fluidkommunikation durch den Zuführkanal um den Dichtstopfen zu verhindern, wobei der Dichtstopfen ein Schieberende (41) und ein Zuführende (42) besitzt, welche einander gegenüberliegen, und einen Strömungskanal (43), welcher sich durch den Dichtstopfen und durch die einander gegenüberliegenden Enden des Dichtstopfens erstrecken, wobei das Schieberende des Dichtstopfens gegen den Schieber drückt und in Dichtkontakt mit diesem steht, wobei der gesamte Dichtstopfen aus Elastomer und verformbar ist; und
(d) einen Nippel (50) in jedem der mindestens zwei Zuführkanäle des Gehäuses, welche die Dichtstopfen enthalten und sich nach innen und außen vom Zuführende der Zuführkanäle erstrecken, wobei die Nippel ein Eingangsende (51) und ein Ausgangsende (52) besitzen, welche einander gegenüber liegen und einen Strömungskanal (53), welcher sich durch jeden Nippel erstreckt, darunter auch durch das Eingangsende und das Ausgangsende, wobei die Nippel so ausgerichtet sind, dass das Ausgangsende eines Nippels gegen das Zuführende eines Dichtstopfens innerhalb des Zuführkanals des Gehäuses drückt und so, dass die Strömungskanäle von Dichtstopfen und Nippel in Fluidkommunikation stehen, wobei die Nippel frei von Schraubgewinde sind, welches die Nippel in den Zuführkanal schraubt;
wobei der Schieber umkehrbar zwischen folgenden Elementen drehen kann: (i) einer geöffneten Position, bei welcher jeder der drei separaten Strömungsdurchgänge durch den Schieber in Fluidkommunikation jeweils mit unterschiedlichen Zuführ- und Spendekanälen des Gehäuses fluchtet, wobei der erste und der zweite Strömungsdurchgang durch den Schieber Fluidkommunikation mit einem Zuführkanal des Gehäuses durch einen Strömungskanal eines Dichtstopfens und Nippels und durch einen Spendenkanal herstellt; und (ii) einer geschlossenen Position, bei welcher der erste und der zweite Strömungsdurchgang durch den Schieber nicht in Fluidkommunikation mit einem Zuführkanal des Gehäuses sind und der vierte Strömungsdurchgang in Fluidverbindung mit Zuführ- und Spendekanälen des Gehäuses steht, mit welchen der dritte Strömungsdurchgang in der geöffneten Position in Fluidverbindung stand.

2. Spender nach Anspruch 1, bei welchem der vierte Strömungsdurchgang eine größere mittlere Querschnittsfläche als der dritte Strömungsdurchgang besitzt.

3. Spender nach einem der vorhergehenden Ansprüche, bei welchem der dritte und der vierte Strömungskanal sich innerhalb des Schiebers schneiden.

4. Spender nach einem der vorhergehenden Ansprüche, bei welchem das Schieberende der Dichtstopfen ein Profil besitzt, welches allgemein mit demjenigen des Schieberprofils zusammenpasst und jeder Dichtstopfen in einem Zuführkanal so gefluchtet ist, dass das Profil des Schieberendes des Dichtstopfens fluchtet und mit dem Profil des Schiebers übereinstimmt.

5. Spender nach Anspruch 4, zudem **dadurch gekennzeichnet, dass** der Dichtstopfen Ausfluchtungsmerkmale (45) besitzt, welche das Einlegen in einen Zuführkanal in einer bekannten Ausrichtung erleichtern, so dass sich die Kontur des Schieberendes der Kontur des Schiebers anpasst.

6. Spender nach einem der vorhergehenden Ansprüche, bei welchem die Zuführkanäle des Gehäuses, welche einen Dichtstopfen enthalten, jeweils frei von Schraubgewinde zum Schrauben eines Elementes in den Zuführkanal sind.

7. Spender nach einem der vorhergehenden Ansprüche, zudem **dadurch gekennzeichnet, dass** der erste und der zweite Zuführkanal koplanar sind und der dritte Zuführkanal nicht koplanar mit einem anderen Strömungskanal ist, und wobei der Schieber zylindrisch ist, wobei der erste und der zweite Strömungsdurchgang sich radial durch den Schieber erstrecken und in der Lage sind, mit zwei Zuführkanälen zu fluchten, und der dritte Strömungskanal in einer nicht koplanaren Ausrichtung zu den anderen Zuführkanälen eintritt, welche koplanar sind, jedoch den Schieber in einer linearen Ausrichtung fluchtend verlässt in Bezug auf die anderen Strömungsdurchgänge in der Weise, dass, wenn der Schieber in einer geöffneten Ausrichtung ausgerichtet ist, die nicht planaren Eingänge zu den Strömungsdurchgängen jeweils mit einem unterschiedlichen der Zuführkanäle fluchten, und Fluide, welche durch die Zuführkanäle strömen, die Strömungsdurchgänge des Schiebers so passieren, dass sie die entlang einer Ebene ausgefluchteten Schieberströmungsdurchgänge verlassen.

8. Spender nach einem der vorhergehenden Ansprüche, zudem beinhaltend einen Auslöser (70), welcher an dem Schieber befestigt ist, so dass, wenn der Auslöser in eine erste Richtung bewegt wird, der Schieber in eine geöffnete Ausrichtung dreht und die Strömungsdurchgänge des Schiebers in Fluidkommunikation mit den Zuführkanälen des Gehäuses fluchtet, und wenn der Auslöser in eine der ersten Richtung gegenüberliegende Richtung bewegt wird, der Schieber in eine geschlossene Ausrichtung dreht.

9. Verfahren zum Verwenden des Spenders nach einem der vorhergehenden Ansprüche, wobei das Verfahren Folgendes beinhaltet: (A) gleichzeitiges Zuführen unter Druck von: (i) einer flüssigen Isocyanatkomponente in einen ersten Zuführkanal des Gehäuses durch die Strömungskanäle eines Nippels und eines Stopfens, welche in dem ersten Zuführkanal befindlich sind; (ii) einer flüssigen Polyolkomponente in einen zweiten Zuführkanal des Gehäuses durch die Strömungskanäle eines Nippels und eines Stopfens, welche in dem zweiten Zuführkanal befindlich sind; und (iii) einem Gas in einen dritten Zuführkanal des Gehäuses; (B) Positionieren des Schiebers des Spenders zum Zulassen des Strömens der flüssigen Isocyanatkomponente durch den ersten Strömungsdurchgang des Schiebers, des Strömens der Polyolkomponente durch den zweiten Strömungsdurchgang des Schiebers und des Strömens des Gases durch den dritten Strömungsdurchgang des Schiebers; und (C) Spenden einer Kombination der Isocyanatkomponente, der Polyolkomponente und des Gases aus dem Spendekanal des Gehäuses.

10. Verfahren nach Anspruch 9, zudem beinhaltend einen Schritt (D) nach Schritt (C), wobei Schritt (D) Positionieren des Schiebers des Spenders in einer geschlossenen Position ist, wobei der erste und der zweite Strömungsdurchgang des Schiebers nicht mehr in Fluidkommunikation mit dem ersten und dem zweiten Zuführkanal des Gehäuses sind und wobei der vierte Strömungsdurchgang des Schiebers in Fluidkommunikation mit dem dritten Strömungskanal des Gehäuses ist und Gas durch den vierten Strömungsdurchgang des Schiebers und aus dem Spendekanal des Gehäuses heraus strömt.

## Revendications

1. Distributeur (10) comprenant :
(a) un boîtier (20) avec une extrémité d'alimentation (21) et une extrémité de distribution opposée (22), l'extrémité d'alimentation présentant au moins trois canaux d'alimentation (23, 24 et 25) définis en son sein et l'extrémité de distribution présentant au moins un canal de distribution (26) défini en son sein;
(b) un clapet à boisseau monté dans le boîtier entre l'extrémité d'alimentation et l'extrémité de distribution, le clapet à boisseau comprenant une bobine (30) avec un premier, un deuxième et un troisième passages d'écoulement séparés (31, 32 et 33) et un quatrième passage d'écoulement (34) qui coupe optionnellement le troisième passage d'écoulement, dans lequel les passages d'écoulement sont définis à travers la bobine et chaque passage d'écoulement présente une ouverture d'extrémité d'alimentation (31a, 32a, 33a et 34a, respectivement) et une ouverture d'extrémité de distribution (31b, 32b, 33b et 34b, respectivement), la bobine présente au moins quatre cannelures de joint (38a, 38b, 38c et 38d) définies sur la circonférence autour de la bobine et dans chacune desquelles se trouve un joint (100a, 100b, 100c et 100d, respectivement), de sorte que chaque joint appuie contre la bobine et le boîtier afin de former un joint étanche autour de la circonférence de la bobine, avec une cannelure de joint définie de chaque côté de l'ouverture d'extrémité d'alimentation et de l'ouverture d'extrémité de distribution de chacun des quatre passages d'écoulement, de sorte que l'ouverture d'extrémité d'alimentation et l'ouverture d'extrémité de distribution des troisième et quatrième passages d'écoulement se trouvent entre les deux mêmes cannelures de joint, tandis que la première ouverture de l'extrémité d'alimentation de passage d'écoulement et l'ouverture de l'extrémité de distribution sont les seules ouvertures de passage d'écoulement des quatre passages d'écoulement se trouvant entre une paire de cannelures de joint et la seconde ouverture d'extrémité d'alimentation de passage d'écoulement et l'ouverture d'extrémité de distribution sont les seules ouvertures de passage d'écoulement des quatre passages d'écoulement se trouvant entre une seconde paire de cannelures de joint ;
(c) un bouchon de fermeture déformable (40) dans au moins deux canaux d'alimentation, positionné de façon à se trouver dans une orientation de scellement avec le boîtier autour du canal d'alimentation de façon à empêcher une communication fluidique à travers le canal d'alimentation autour du bouchon de fermeture, le bouchon de fermeture présentant une extrémité de bobine opposée (41) et une extrémité d'alimentation (42) et un canal d'écoulement (43) s'étendant à travers le bouchon de fermeture et à travers les extrémités opposées du bouchon de fermeture, dans lequel l'extrémité de bobine du bouchon de fermeture s'appuie contre et est en contact étanche avec la bobine, l'intégralité du bouchon de fermeture étant élastomère et déformable ; et
(d) un mamelon (50) dans chacun des au moins deux canaux d'alimentation du boîtier contenant les bouchons de fermeture et s'étendant à l'intérieur et à l'extérieur de l'extrémité d'alimentation des canaux d'alimentation, les mamelons présentant une extrémité d'entrée (51) et une extrémité de sortie (52) opposées et un canal d'écoulement (53) s'étendant à travers chaque mamelon, y compris à travers les extrémités de sortie et d'entrée, les mamelons étant orientés, de sorte que l'extrémité de sortie d'un mamelon appuie contre l'extrémité d'alimentation d'un bouchon de fermeture dans le canal d'alimentation du boîtier, et de sorte que les canaux d'écoulement du bouchon de fermeture et du mamelon soient en communication fluidique, les mamelons étant dénués de filetage de vis qui visse le mamelon dans le canal d'alimentation ;
dans lequel la bobine peut tourner de manière inverse entre : (i) une position ouverte dans laquelle chacun des trois passages d'écoulement séparés à travers la bobine s'aligne en communication fluidique avec chacun des canaux d'alimentation et de distribution distincts du boîtier, les premier et deuxième passages d'écoulement à travers la bobine atteignant une communication fluidique avec un canal d'alimentation du boîtier à travers un canal d'écoulement d'un bouchon de fermeture et d'un mamelon et à travers un canal de distribution ; et (ii) une position fermée dans laquelle les premier et deuxième passages d'écoulement à travers la bobine ne sont pas en communication fluidique avec un canal d'alimentation du boîtier et le quatrième passage d'écoulement est en communication fluidique avec les canaux d'alimentation et de distribution du boîtier avec lesquels le troisième passage d'écoulement était en communication fluidique lorsqu'ils étaient dans la position ouverte.

2. Distributeur selon la revendication 1, dans lequel le quatrième passage d'écoulement présente une superficie en coupe transversale moyenne supérieure au troisième passage d'écoulement.

3. Distributeur selon l'une quelconque des revendications précédentes, dans lequel les troisième et quatrième canaux d'écoulement se coupent dans la bobine.

4. Distributeur selon l'une quelconque des revendications précédentes, dans lequel l'extrémité de bobine des bouchons de fermeture présente un profil qui s'adapte généralement à celui du profil de bobine et chaque bouchon de fermeture est aligné dans un canal d'alimentation, de sorte que le profil de l'extrémité de bobine du bouchon de fermeture soit aligné et se conforme au profil de la bobine.

5. Distributeur selon la revendication 4, **caractérisé en outre en ce que** le bouchon de fermeture présente des éléments d'alignement (45) qui facilitent l'insertion dans un canal d'alimentation selon une orientation connue, de sorte que le contour de l'extrémité de bobine s'adapte au contour de la bobine.

6. Distributeur selon l'une quelconque des revendications précédentes, dans lequel les canaux d'alimentation du boîtier qui contiennent un bouchon de fermeture sont chacun dénués de filetage afin de visser un élément dans le canal d'alimentation.

7. Distributeur selon l'une quelconque des revendications précédentes, **caractérisé en outre en ce que** les premier et deuxième canaux d'alimentation sont coplanaires et le troisième canal d'alimentation n'est pas coplanaire avec l'un quelconque des autres canaux d'écoulement et dans lequel la bobine est cylindrique, les premier et deuxième passages d'écoulement s'étendant de manière radiale à travers la bobine et pouvant s'aligner avec les deux canaux d'alimentation et le troisième passage d'écoulement entrant dans une orientation non-coplanaire avec les autres canaux d'alimentation qui sont coplanaires mais sortant de la bobine alignée selon une orientation linéaire par rapport aux autres passages d'écoulement, de sorte que, lorsque la bobine est orientée selon une orientation ouverte, les entrées non-planaires par rapport aux passages d'écoulement s'alignent chacune avec un canal différent des canaux d'alimentation et des fluides s'écoulant à travers les canaux d'alimentation passent à travers les passages d'écoulement de la bobine, de façon à sortir des passages d'écoulement de bobine alignés le long d'un plan.

8. Distributeur selon l'une quelconque des revendications précédentes, comprenant en outre un déclencheur (70) fixé à la bobine, de sorte que, lorsque le déclencheur est déplacé dans une première direction, la bobine tourne vers une orientation ouverte et aligne les passages d'écoulement de la bobine en communication fluidique avec les canaux d'alimentation du boîtier et lorsque le déclencheur se déplace dans une direction opposée à la première direction, la bobine tourne dans une orientation fermée.

9. Procédé d'utilisation du distributeur selon l'une quelconque des revendications précédentes, le procédé comprenant : (A) la fourniture simultanée sous pression : (i) d'un composant isocyanate liquide dans un premier canal d'alimentation du boîtier à travers les canaux d'écoulement d'un mamelon et d'un bouchon se trouvant dans le premier canal d'alimentation ; (ii) d'un composant polyol liquide dans un deuxième canal d'alimentation du boîtier à travers les canaux d'écoulement d'un mamelon et d'un bouchon se trouvant dans le deuxième canal d'alimentation ; et (iii) d'un gaz dans un troisième canal d'alimentation du boîtier ; (B) le positionnement de la bobine du distributeur de façon à permettre au composant isocyanate liquide de s'écouler à travers le premier passage d'écoulement de la bobine, au composant polyol de s'écouler à travers le deuxième passage d'écoulement de la bobine et au gaz de s'écouler à travers le troisième passage d'écoulement de la bobine ; et (C) la distribution d'une combinaison du composant isocyanate, du composant polyol et du gaz hors du canal de distribution du boîtier.

10. Procédé selon la revendication 9, comprenant en outre une étape (D) après l'étape (C), dans lequel l'étape (D) consiste à positionner la bobine du distributeur dans une position fermée, dans laquelle les premier et deuxième passages d'écoulement de la bobine ne sont plus en communication fluidique avec les premier et deuxième canaux d'écoulement du boîtier et dans lequel le quatrième passage d'écoulement de la bobine est en communication fluidique avec le troisième canal d'écoulement du boîtier et le gaz s'écoule à travers le quatrième passage d'écoulement de la bobine et hors du canal de distribution du boîtier.
